# EUROPEAN PATENT SPECIFICATION

(11) **EP 3 971 791 B1**
(45) Date of publication and mention of the grant of the patent: **08.04.2026**
(21) Application number: 20805524.4
(22) Date of filing: 13.05.2020
(51) Int. Cl.: G06N 3/084, G06N 3/09, G06N 3/045, G06N 3/0464, G06V 10/776, G06V 10/82, G06F 18/21, G06F 18/2413

(54) **CLASSIFICATION RESULT VERIFYING METHOD AND CLASSIFICATION RESULT LEARNING METHOD WHICH USE VERIFICATION NEURAL NETWORK, AND COMPUTING DEVICE FOR PERFORMING METHODS**
KLASSIFIZIERUNGSERGEBNISVERIFIZIERUNGSVERFAHREN UND KLASSIFIZIERUNGSERGEBNISLERNVERFAHREN, WELCHE NEURONALE VERIFIZIERUNGSNETZE VERWENDEN, UND COMPUTERVORRICHTUNG ZUR DURCHFÜHRUNG DER VERFAHREN
PROCÉDÉ DE VÉRIFICATION DE RÉSULTAT DE CLASSIFICATION ET PROCÉDÉ D'APPRENTISSAGE DE RÉSULTAT DE CLASSIFICATION QUI UTILISENT UN RÉSEAU NEURONAL DE VÉRIFICATION, ET DISPOSITIF INFORMATIQUE PERMETTANT DE RÉALISER DES PROCÉDÉS

(30) Priority: 13.05.2019 KR 20190055544
(43) Date of publication of application: 23.03.2022
(73) Proprietor: Samsung Electronics Co., Ltd., Suwon-si, Gyeonggi-do 16677 (KR)
(72) Inventor: OK, Seongmin, Suwon-si Gyeonggi-do 16678 (KR); KIM, Young-Seok, Suwon-si Gyeonggi-do 16678 (KR); NA, Hwidong, Suwon-si Gyeonggi-do 16678 (KR); YOO, Sanghyun, Suwon-si Gyeonggi-do 16678 (KR); LEE, Hoshik, Suwon-si Gyeonggi-do 16678 (KR); CHOI, Junhwi, Suwon-si Gyeonggi-do 16678 (KR)
(74) Representative: Arnold & Siedsma
(86) International application number: PCT/KR2020/006309
(87) International publication number: WO 2020/231188

(56) References cited:
- WO-A2-2008/008142
- KR-A- 20160 037 022
- KR-A- 20190 004 429
- US-A1- 2010 312 486
- US-A1- 2016 034 809
- HU XIAOPENG ET AL: "Reliability verification-based convolutional neural networks for object tracking", IET IMAGE PROCESSING, IET, UK, vol. 13, no. 1, 10 January 2019 (2019-01-10), pages 175 - 185, XP006070987, ISSN: 1751-9659, DOI: 10.1049/IET-IPR.2018.5785

## Description

### Technical Field

The following description relates to methods of verifying and learning a classification result using a verification neural network, and a computing device for performing the methods.

### Background Art

A neural network is used to classify predetermined objects or patterns represented by input data. For example, when a predetermined image is input to the neural network, the neural network may analyse an object or pattern the image represents and may output data in a form of a probability value.

However, input data to be actually classified may be different from training data used in a process of training the neural network. For example, when the neural network classifies an image, which is input data, into a class called a pattern A, an additional process may be required to determine whether a classification result of the neural network is available for a predetermined application.

Document *"*Reliability verification-based convolutional neural networks for object tracking" of Xiaopeng Hu et al., in IET Image Processing, 2019, Vol. 13, Issue 1, pages 175-185, discloses a tracking algorithm based on the reliability analysis of a convolutional neural network, in which a verification network is designed to guarantee the reliability of a tracking network.

### Technical solutions

According to an aspect of the invention, a method according to claim 9 is provided.

The intermediate output value for the input data may include an output value of one hidden layer or output values of at least two hidden layers among a plurality of hidden layers included in the classification neural network when the input data is input to the classification neural network.

The intermediate output value of the classification neural network may include an output value of a hidden layer identical to a hidden layer corresponding to the intermediate output value input to the verification neural network when the classification neural network is trained.

The classification result verification method may further include determining whether the classification result of the input data determined by the classification neural network is to be used, based on the reliability of the classification result of the input data.

The verification neural network may include at least five hidden layers.

The classification neural network may include at least five hidden layers.

According to another aspect of the invention, a method according to claim 1 is provided.

The verification neural network may be trained based on attribute information of the training data and a distance between the training data and sample data generated from the training data, using the reliability model.

The verification neural network receives a score of a central point corresponding to the intermediate output value received from the classification neural network, determines a score of a sample point corresponding to sample data randomly generated around the central point, and is trained based on the score of the central point and the score of the sample point.

In the reliability model, a reliability may decrease when a distance between a central point corresponding to the training data and a sample point corresponding to sample data increases.

The verification neural network may be trained using either: (i) a first reliability model that determines a reliability of a sample point corresponding to sample data with an attribute similar to the training data based on a distance between the sample point and a central point corresponding to the training data; or (ii) a second reliability model that determines a reliability of a sample point corresponding to sample data with an attribute similar to the training data based on a distance between the sample point and a central point corresponding to the training data and based on a gradient direction of the central point that is attribute information of the training data.

The verification neural network may include at least five hidden layers.

The classification neural network may include at least five hidden layers.

According to another aspect of the invention, a computing device according to claim 11 is provided**.**

The intermediate output value for the input data may include an output value of one hidden layer or output values of at least two hidden layers among a plurality of hidden layers included in the classification neural network when the input data is input to the classification neural network.

The intermediate output value of the classification neural network may include an output value of a hidden layer identical to a hidden layer corresponding to the intermediate output value input to the verification neural network when the classification neural network is trained.

The processor is configured to determine whether the classification result of the input data determined by the classification neural network is to be used, based on the reliability of the classification result of the input data.

The verification neural network may include at least five hidden layers.

The classification neural network may include at least five hidden layers.

The classification neural network may a convolutional neural network (CNN).

The classification neural network may include at least five hidden layers.

The verification neural network may a CNN.

The verification neural network may include at least five hidden layers.

The input data is image data or audio data.

The computing device may be configured to determine whether to use the classification result, based on the reliability output by the verification neural network.

The classification neural network may include an input layer, an output layer and a plurality of hidden layer, and the intermediate output value may be an output layer of a hidden layer closer to the output layer than the input layer.

According to another aspect of the invention, a computing device according to claim 8 is provided.

### Brief Description of Drawings

FIG. 1 illustrates an example of a classification neural network and a verification neural network.
FIG. 2 illustrates an example of a classification result determined by a classification neural network.
FIG. 3 illustrates an example of a process of training a verification neural network.
FIG. 4 illustrates an example of a process in which a verification neural network determines a reliability of a classification result.
FIG. 5 illustrates an example of a process of determining a score of a sample point to train a verification neural network.
FIG. 6 illustrates examples of reliability models that may be used to train a verification neural network to determine a reliability of a classification result.
FIG. 7 is a flowchart illustrating an example of a process of training a verification neural network.
FIG. 8 is a flowchart illustrating an example of a process in which a verification neural network determines a reliability of a classification result of input data.

### Best Mode for Carrying Out the Invention

Hereinafter, examples will be described in detail with reference to the accompanying drawings.

Regarding the reference numerals assigned to the elements in the drawings, it should be noted that the same elements will be designated by the same reference numerals, wherever possible, even though they are shown in different drawings. Also, in the description of examples, detailed description of well-known related structures or functions will be omitted when it is deemed that such description will cause ambiguous interpretation of the present disclosure.

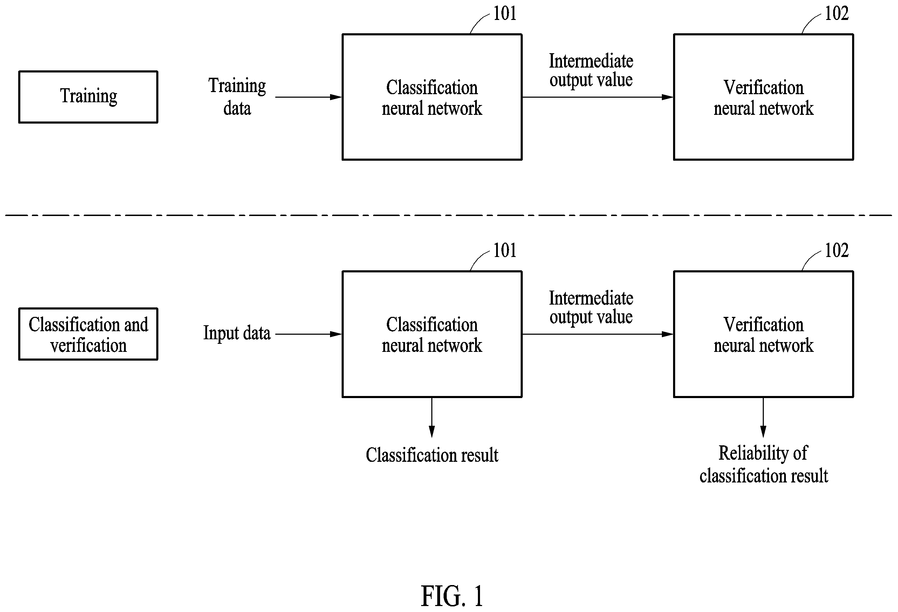

FIG. 1 illustrates an example of a classification neural network and a verification neural network.

FIG. 1 illustrates a classification neural network 101 and a verification neural network 102. Each of the classification neural network 101 and the verification neural network 102 may be defined as a neural network including a plurality of layers. The neural network may be, for example, a convolutional neural network (CNN) and may include an input layer, a plurality of hidden layers, and an output layer. For example, the neural network may be a network including at least five hidden layers, at least ten hidden layers, at least "20" hidden layers or at least "30" hidden layers.

The classification neural network 101 may perform a classification process of determining which pattern or object is represented by input data. The classification neural network 101 may allow the input data to pass through a plurality of hidden layers that are set with a plurality of levels and determines a class such as an object or a pattern represented by the input data. For example, when the input data is an image, the classification neural network 101 may classify the image into one class among a plurality of classes, for example, dogs, cats, airplanes, ships, people, traffic lights, vehicles, or bicycles. The classification neural network 101 determines a class with a highest
score among the classes as a classification result of the input data.

When the classification neural network 101 classifies input data similar to training data that is classified through a training process, a classification result with a high reliability that is available in an application may be output. However, when the classification neural network 101 classifies input data that is not similar to the training data that is classified through the training process, a classification result with a relatively low reliability may be output. Thus, a reliability of the classification result of the input data output from the classification neural network 101 may need to be calculated.

A reliability of a classification result derived from the classification neural network 101 may be used to use or reject the classification result. For example, when the classification neural network 101 is used to classify data in various applications, for example, face recognition, autonomous driving, or voice recognition, the reliability of the classification result may be used to estimate an uncertainty of the classification result of the classification neural network 101. In an example, when the reliability of the classification result is greater than a predetermined reference value, the reliability of the classification result may be used in an application. In another example, when the reliability of the classification result is less than the predetermined reference value, the classification result of the classification neural network 101 may be discarded or another predetermined operation may be performed.

Referring to FIG. 1, to determine whether the classification result of the input data output from the classification neural network 101 is reliable, the verification neural network 102 defined separately from the classification neural network 101 is used. The verification neural network 102 determines a reliability of a classification result derived from the classification neural network 101. For example, when the input data is an image, the classification neural network 101 performs a classification process of determining which object or pattern the image represents, and the verification neural network 102 determines a reliability of a classification result of the classification neural network 101.

According to the invention, the verification neural network 102 determines a reliability of a classification result for data using an intermediate output value collected from a classification process of input data processed by the classification neural network 101. The intermediate output value may be an output value of a hidden layer selected among a plurality of hidden layers included in the classification neural network 101. The intermediate output value of the classification neural network 101 is also used to train the verification neural network 102.

In an example, the verification neural network 102 may be trained to calculate a reliability of a classification result to increase when a similarity between training data used to train the classification neural network 101 and training data used to train the verification neural network 102 increases. In another example, the verification neural network 102 may be trained to calculate a reliability of a classification result to decrease when the similarity between the training data used to train the classification neural network 101 and the training data used to train the verification neural network 102 decreases.

When both the classification neural network 101 and the verification neural network 102 are trained, and when input data to be classified is input, the classification neural network 101 derives a classification result of the input data, and the verification neural network 102 may calculate a reliability of the classification result of the input data.

As described above, when the reliability of the classification result output from the classification neural network 101 which is calculated by the verification neural network 102 satisfies a predetermined reference value, the reliability of the classification result may be approved and the classification result may be utilized in an application applying to the classification neural network 101. When the reliability of the classification result does not satisfy the predetermined reference value, the classification result output from the classification neural network 101 may not be utilized or another predetermined action may be performed.

Referring to FIG. 1, the classification neural network 101 is trained on a classification
process based on training data. The verification neural network 102 may be trained on a process of calculating a reliability of a classification result determined by the classification neural network 101 using an intermediate output value identified in the classification process of the classification neural network 101.

When the above training process is completed, and when input data is input to the classification neural network 101, the classification neural network 101 may output a classification result of the input data. The verification neural network 102 that is already trained may calculate a reliability of the classification result of the input data determined by the classification neural network 101. The above-described training process based on the training data and a process of performing processing using the input data may be performed by a computing device that includes hardware, for example, a processor or a memory.

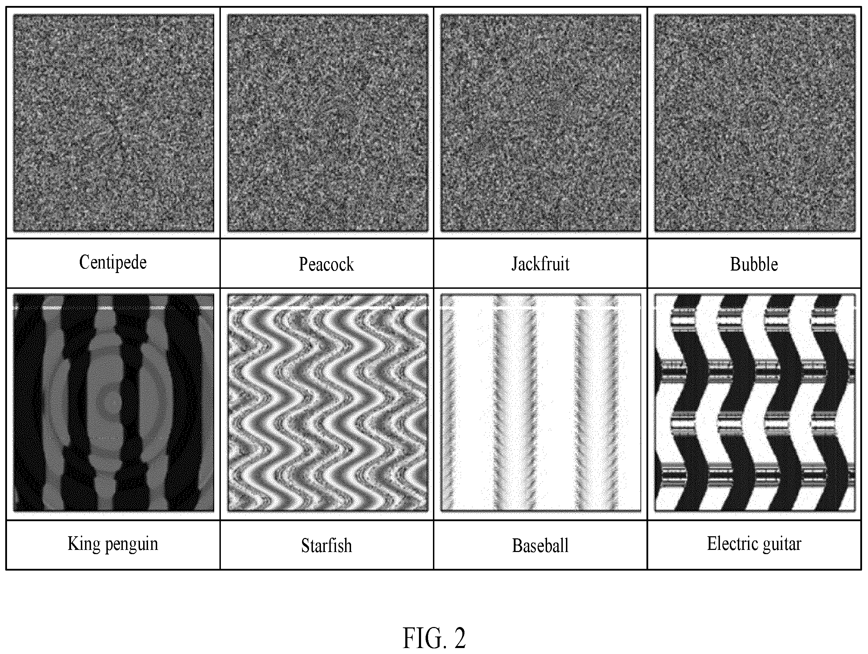

FIG. 2 illustrates an example of a classification result determined by a classification neural network.

FIG. 2 illustrates an example of a classification result of input data derived by the classification neural network 101. FIG. 2 illustrates a result obtained by classifying input data including eight images by the classification neural network 101. Referring to FIG. 2, the classification neural network 101 may determine which object or pattern an image represents through a process of classifying images. When the input data passes through a plurality of hidden layers included in the classification neural network 101, a score of each of a plurality of classes (for example, patterns 1, 2, ..., and N) may be determined, and a class with a highest score may be determined as a classification result of the input data.

In an example, to consider whether the classification result of the input data derived from the classification neural network 101 is available for other applications, the verification neural network 102 set separately from the classification neural network 101 may calculate a reliability of the classification result of the input data. For example, the classification neural network 101 may be assumed to classify seventh input data as a "baseball" pattern as shown in FIG. 2. In this example, the verification neural network 102 may calculate a reliability of a classification result of the seventh input data corresponding to the "baseball" pattern as a score between "0" and "1".

The verification neural network 102 may determine a reliability of the classification result of the input data derived from the classification neural network 101, using an intermediate output value that is an output value of one hidden layer or output values of at least two hidden layers among the plurality of hidden layers included in the classification neural network 101. The intermediate output value may be, for example, an output value derived from one of the plurality of hidden layers of the classification neural network 101, or an output value of each of at least two hidden layers. An output value of a hidden layer may be determined as a feature map determined based on a convolution of a filter and an input value of the hidden layer.

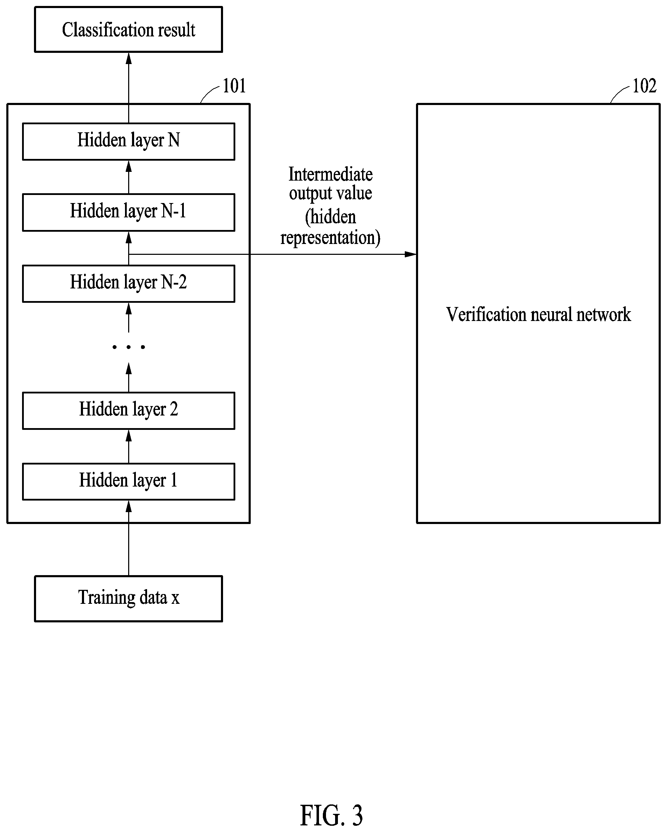

FIG. 3 illustrates an example of a process of training a verification neural network.

A classification process of the classification neural network 101 and a determination of a reliability of the verification neural network 102 may be performed by a computing device that includes a processor and a memory. Referring to FIG. 3, to learn the classification process of the classification neural network 101, training data may be input to the classification neural network 101.

In an example, when training data x inputs to the classification neural network 101 and is applied to the plurality of hidden layers, the classification neural network 101 may be trained by updating a parameter of each of the hidden layers corresponding to each node while performing backpropagation of an error between a label of a classification result of the training data x and an output of the classification result derived from the classification neural network 101. The classification neural network 101 may be optimized by updating a weight of a filter applied to each of the plurality of hidden layers that determine which object or pattern the training data x represents through a training process.

The verification neural network 102 is trained to calculate a reliability of a classification result. For a training process of the verification neural network 102, an intermediate output value (for example, a hidden representation) determined by the classification neural network 101 is used. In an example, when the classification neural network 101 includes "N" hidden layers, an output value of a hidden layer corresponding to a predetermined operation may be set as an intermediate output value of the classification neural network 101. To learn a process of determining a reliability, the verification neural network 102 may use an output value of a hidden layer that is an intermediate output value of the classification neural network 101.

In FIG. 3, an intermediate output value of the classification neural network 101 which is an output value (for example, a hidden representation) of an (N-2)-th hidden layer may be used to train the verification neural network 102. In other words, the classification neural network 101 and the verification neural network 102 may be simultaneously trained. The classification neural network 101 may be trained by updating a parameter of each of the hidden layers of the classification neural network 101 while a backpropagation process is repeatedly being performed after training data is applied to the classification neural network 101. The verification neural network 102 may also be trained using an output value of a hidden layer derived during training of the classification neural network 101.

Although an output value of a single hidden layer is used to train the verification neural network 102 in the example of FIG. 3, output values of at least two hidden layers may be used to train the verification neural network 102.

In an example, a plurality of verification neural networks 102 may be configured, although not shown in FIG. 3. In this example, output values (for example, intermediate output values) of different hidden layers among the hidden layers included in the classification neural network 101 may be set and implemented as input values of different verification neural networks 102, and a final reliability of a classification result of the classification neural network 101 may also be derived by combining (for example, averaging) reliabilities calculated in the plurality of verification neural networks 102.

In another example, output values of different hidden layers may be input to one verification neural network 102. In this example, the one verification neural network 102 may calculate a reliability of a classification result by combining output values of at least two selected hidden layers. In other words, an output value of each of at least two hidden layers among "N" hidden layers of the classification neural network 101 may be input to the verification neural network 102. Also, output values of at least two hidden layers may be combined (for example, summed or averaged) and may be input to the verification neural network 102, and the verification neural network 102 may derive a reliability of the classification result of the classification neural network 101 based on a result obtained by combining the output values of the at least two hidden layers. When the output values of the hidden layers are combined, a relatively high weight may be set for a hidden layer close to an output layer.

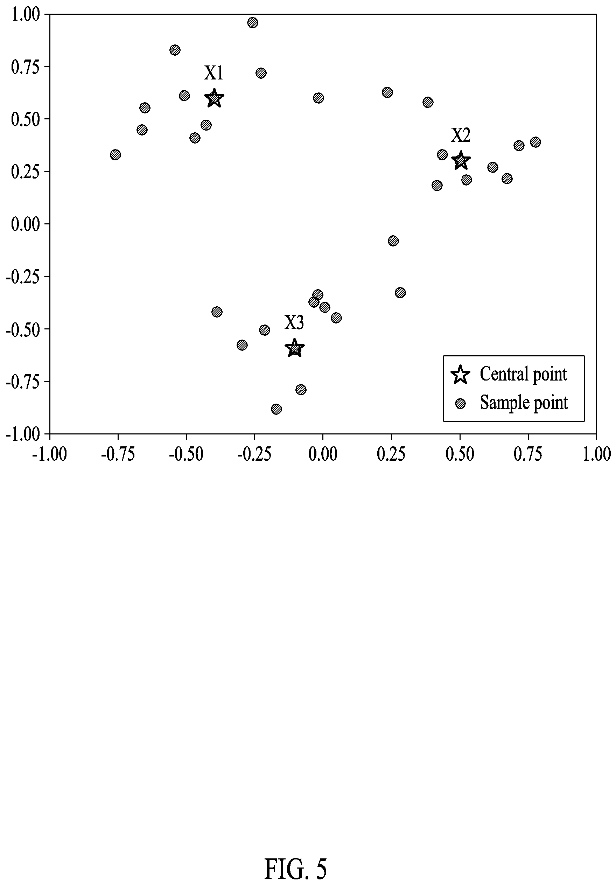

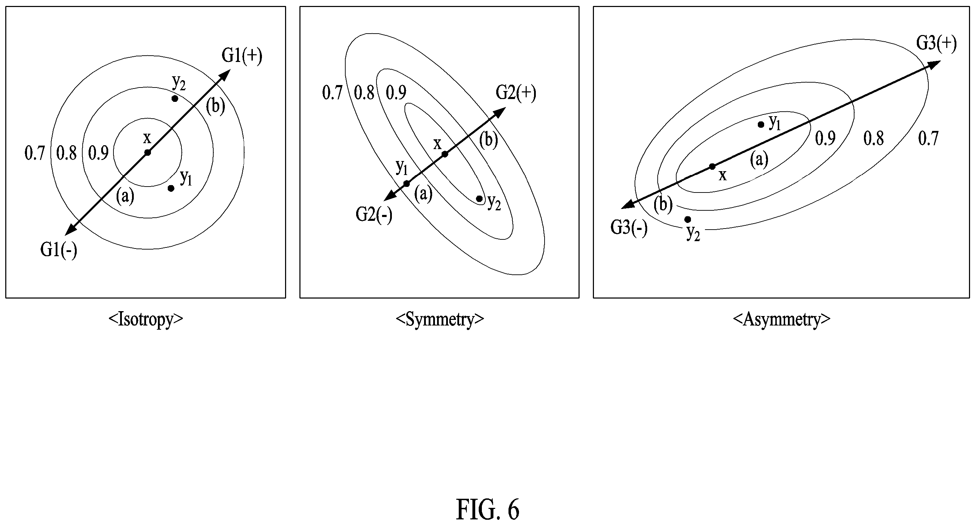

A process in which the verification neural network 102 learns a reliability will be further described below with reference to FIGS. 5 and 6.

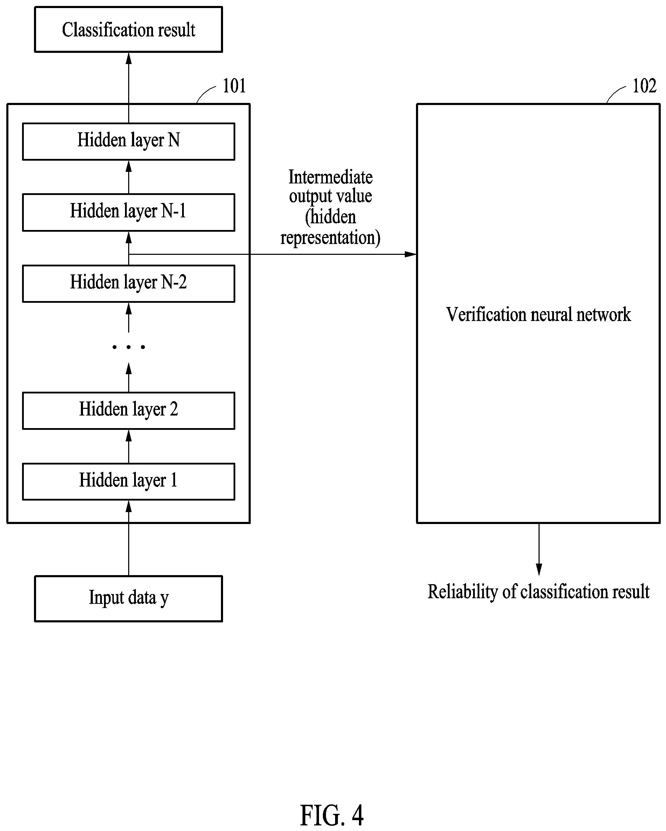

FIG. 4 illustrates an example of a process in which a verification neural network determines a reliability of a classification result.

Input data y to be classified as a predetermined class may be input to the classification neural network 101 trained as described above with reference to FIG. 3. The input data y may pass through the plurality of hidden layers included in the classification neural network 101. The classification neural network 101 classifies the input data y into one of a plurality of classes through an input data classification process, and outputs a classification result.

The verification neural network 102 determines a reliability of a classification result of input data processed by the classification neural network 101. The verification neural network 102 determines a reliability of the classification result of the input data output from the classification neural network 101 using an intermediate output value of the classification neural network 101.

In an example, the verification neural network 102 may compare a reliability of a classification result of input data and a reference value. In an example, when the reliability is greater than or equal to the reference value, the verification neural network 102 may determine that the classification result of the input data output from the classification neural network 101 is reliable. In another example, when the reliability is less than the reference value, the verification neural network 102 may determine that the classification result of the input data output from the classification neural network 101 is unreliable. In this example, the verification neural network 102 may reject the classification result of the input data and may perform a predetermined operation.

A training and determination process for determining a reliability of a classification result in the verification neural network 102 will be further described below with reference to FIGS. 5 to 7.

FIG. 5 illustrates an example of a process of determining a score of a sample point to train a verification neural network.

To train the verification neural network 102 that determines a reliability of a classification result, an intermediate output value of the classification neural network 101 that is an output value of one of a plurality of hidden layers included in the classification neural network 101 may be used. FIG. 5 illustrates a domain of an intermediate output value.

In an example, when training data is input to the classification neural network 101, an output value (for example, a hidden representation) of one hidden layer or at least two hidden layers selected from the plurality of hidden layers of the classification neural network 101 may be set as an intermediate output value of the classification neural network 101 and may be used to train the verification neural network 102.

In FIG. 5, central points X1 to X3 may be points corresponding to an intermediate output value that is an output value of one of the plurality of hidden layers of the classification neural network 101 when three different pieces of training data are input to the classification neural network 101. In other words, a central point is actually associated with training data used to train the classification neural network 101.

Also, a sample point is a point randomly generated around a central point. In other words, the sample point may be virtually generated from training data that is actually used for training, and may be used to train the verification neural network 102. Here, the sample point may be associated with virtual sample data having attributes similar to those of actual training data. The sample point of FIG. 5 may be newly generated at the central point through Gaussian sampling.

In other words, the verification neural network 102 may generate sample data for scoring to be similar to training data, to cover input data including a variety of information to be actually classified. The above sample point and central points associated with training data used to train the classification neural network 101 may be used to train the verification neural network 102.

The classification neural network 101 may determine a score of each of the central point and the sample point. Here, the score may be a score of a class of data to be classified at a predetermined point. For example, when the classification neural network 101 classifies training data of the central point X1 as one of a class 1 (dogs), a class 2 (cats), a class 3 (pigs), and a class 4 (chickens), a score of the central point X1 may be a score to determine a predetermined class (for example, cats of the class 2). Scores may be determined differently depending on a selected class.

The verification neural network 102 receives a hidden representation that is an intermediate output value of the classification neural network 101, and a score of a central point corresponding to the hidden representation from the classification neural network 101. Also, the verification neural network 102 determines a score of a sample point randomly generated around the central point. In this example, the score of the sample point generated around the central point may be higher or lower than a score of the central point for a predetermined class. In other words, the score of the central point may not need to be higher than the score of the sample point.

A process of training the verification neural network 102 may be performed based on a score of each of the central point and the sample point. Training of the verification neural network 102 will be further described below with reference to FIG. 6.

FIG. 6 illustrates examples of reliability models that may be used to train a verification neural network to determine a reliability of a classification result.

FIG. 6 illustrates three types of reliability models. A reliability model may be expressed by contour lines, and may determine a reliability of sample data used to train the verification neural network 102. Here, the sample data, as data corresponding to the sample point of FIG. 5, may be data randomly generated for training data.

For example, a reliability of a sample point corresponding to predetermined sample data may be determined from a selected reliability model. The reliability model may indicate that a reliability decreases when a distance between a central point corresponding to training data and a sample point corresponding to sample data increases. In an example, the central point may have a reliability of "1", a sample point close to the central point may have a reliability of "0.9", and a sampler point farther than that may have a reliability of "0.8".

The reliability model may be classified as (i) a first model that determines a reliability of a sample point based on a distance between the sample point and a central point corresponding to training data; or (ii) a second model that determines a reliability of a sample point based on a distance between the sample point and a central point corresponding to training data and based on a gradient direction of the central point that is attribute information of the training data. In FIG. 6, an isotropy model may correspond to the first model, and a symmetry model and an asymmetry model may correspond to the second model.

Reliability models of the verification neural network 102 may be used to determine a reliability of data to train the verification neural network 102, and may be classified as the isotropy model, the symmetry model and the asymmetry model described above. The above three reliability models may be determined based on a type of training data (for example, audio data, or image data), a size (for example, a number of hidden layers) of the classification neural network 101, or a type of the classification neural network 101.

In particular, a scheme of determining a reliability of data to be used to train the verification neural network 102 based on a gradient and/or a distance to a central point X corresponding to training data is described with reference to FIG. 6. A gradient G of FIG. 6 may be information indicating a degree of a sharp change (increase or decrease) in scores from a central point to a sample point.

The gradient may be set as one direction in which a score of a sample point significantly increases or decreases among several directions for the central point X. A positive (+) gradient may represent a direction in which a score of a sample point most significantly increases around the central point, and a negative (-) gradient may represent a direction in which a score of a sample point most significantly decreases around the central point. The gradient may be set based on training data and may refer to attribute information of training data.

Hereinafter, the above-described reliability models are described in more detail.

### (1) Isotropy model

In the isotropy model of FIG. 6, a reliability distribution is represented in forms of contour lines forming concentric circles around a central point X. In the isotropy model, a gradient G1 for the central point X may be set, however, a reliability may be determined only for a distance to the central point X. Here, in the isotropy model, sample points located at the same distance from the central point X may be determined to have the same reliability.

In the isotropy model, sample points y1 and y2 may be assumed to be the same distance from the central point X. However, since the sample point y2 is closer to the gradient G1 of the central point X than the sample point y1, a score of the sample point y2 may be actually higher than that of the sample point y1. The sample points y1 and y2 may refer to output values (for example, hidden representations) of hidden layers when first input data and second input data are input to the classification neural network 101, respectively.

In the isotropy model, the same reliability may be designated for sample points located at the same distance from the center point X, regardless of a gradient for the center point X. In other words, a reliability (a) of the sample point y1 and a reliability (b) of the sample point y2 may be determined to be the same as a reliability of about "0.85".

### (2) Symmetry model

In a symmetry model of FIG. 6, a reliability distribution is represented in forms of contour lines forming ellipses around a central point X. In the symmetry model, a gradient G2 for the central point X may be set. Here, the gradient G2 may refer to a direction in which a score is most sharply changed around the central point X (in the case of G2(+), the score increases, and in the case of G2(-), the score decreases). Here, in the symmetry model, a reliability may be set to be relatively more quickly changed for a direction in which a score is sharply changed.

In other words, based on the symmetry model, a sharp change in the score may indicate that it is difficult to set a high reliability for a classification result. That is, in the symmetry model, reliabilities of sample points located at the same distance from the central point X may be determined differently based on whether the sample points are close to a gradient direction. The symmetry model may take into consideration a reliability according to a degree of change in a score of a sample point.

In the symmetry model, sample points y1 and y2 may be assumed to be the same distance from the central point X. Here, since the sample point y1 located closer to the gradient G2 for the central point X between the sample points y1 and y2 has a greater score difference from the central point X than the sample point y2, a reliability (a) of the sample point y1 may be determined to be less than a reliability (b) of the sample point y2. In the symmetry model, due to a greatest degree of change in a score for a gradient direction of the central point X, a greatest degree of a change in a reliability may appear and a narrowest gap between contour lines may be determined.

### (3) Asymmetry model

In an asymmetry model of FIG. 6, a reliability distribution is represented in forms of atypical contour lines around a central point X. In the asymmetry model, a gradient G3 for the central point X may be set. Here, the gradient G3 may refer to a direction in which a score is most sharply changed around the central point X (in the case of G3(+), the score increases, and in the case of G3(-), the score decreases). Here, in the asymmetry model, a high reliability may be set for a direction (a direction of a positive (+) gradient) in which a score sharply increases, unlike the symmetry model. A low reliability may be set for a direction of a negative (-) gradient that is opposite to the direction of the positive (+) gradient.

By the asymmetry model, a sharp increase in a score may indicate that a high reliability is set due to a high probability when classified into classes. Thus, as a sample point approaches a gradient G3(+), a reliability of the sample point may be determined to increase. Since a score of a target point most significantly decreases as the target point approaches a gradient G3(-), a reliability of a sample point may be determined to decrease.

In other words, in the asymmetry model, a reliability may be determined differently depending on whether sample points located at the same distance from the center point X are close to a gradient direction. The asymmetry model may take into consideration a reliability based on a score of a target point.

In the asymmetry model, sample points y1 and y2 may be assumed to be the same distance from the central point X. Here, the sample point y1 located closer to the gradient G3 for the central point X between the sample points y1 and y2 may have a greater score difference from the central point X than the sample point y2. Accordingly, a reliability (a) of the sample point y1 may be determined to be greater than a reliability (b) of the sample point y2. Also, in the asymmetry model, due to a greatest degree of a change in a score for a direction of the gradient G3 (+) direction of the central point X, a smallest degree of a change in a reliability may be determined.

As a sample point approaches the gradient G3(+) even though sample points are located at the same distance from the center point X, a degree of a decrease in a reliability from the center point X may decrease. Thus, a widest gap between the contour lines may be determined in the direction of the gradient G3(+) in the asymmetry model. However, as a sample point approaches the gradient G3(-) even though the sample points are located at the same distance from the central point X, the degree of the decrease in the reliability from the central point X may increase. Thus, in the asymmetry model, a narrowest gap between the contour lines may be determined in the direction of the gradient G3(-).

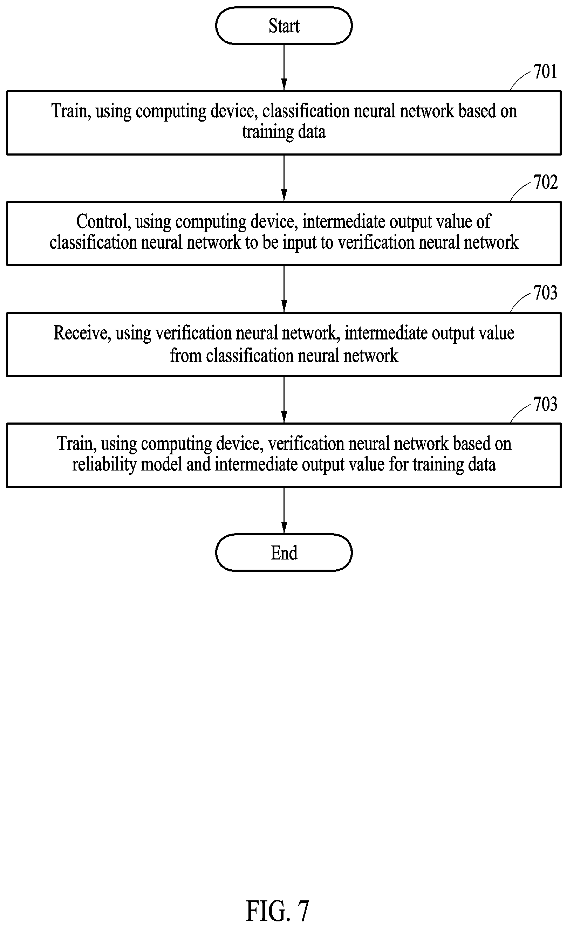

FIG. 7 is a flowchart illustrating an example of a process of training a verification neural network.

In operation 701, a computing device trains the classification neural network 101 based on training data.

In operation 702, the computing device may control an intermediate output value of the classification neural network 101 to be **input** to the verification neural network 102. The intermediate output value of the classification neural network 101 may be an output value of one hidden layer or output values of at least two hidden layers determined in advance when training data passes through hidden layers included in the classification neural network 101.

In operation 703, the verification neural network 102 receives the intermediate output value from the classification neural network 101.

In operation 704, the computing device trains the verification neural network 102 based on a reliability model and an intermediate output value for the training data.

The computing device may determine a reliability model to designate a reliability of sample data to be used to train the verification neural network 102, using the intermediate output value of the classification neural network 101, and may train the verification neural network 102 based on the determined reliability model and the sample data.

Here, the reliability model may randomly generate a plurality of sample points around a central point corresponding to the intermediate output value of the classification neural network 101 and may be generated using scores of the sample points.

The reliability model has been described above with reference to FIG. 6.

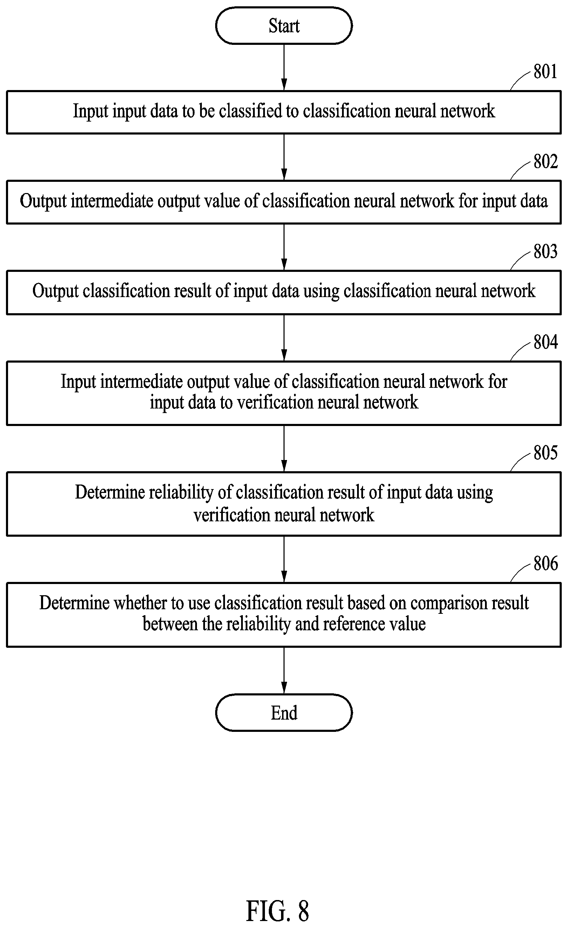

FIG. 8 is a flowchart illustrating an example of a process in which a verification neural network determines a reliability of a classification result of input data. The process of FIG. 8 may be performed using the classification neural network 101 and the verification neural network 102 that are completely trained.

In operation 801, the computing device inputs input data to be classified to the classification neural network 101.

In operation 802, the computing device outputs an intermediate output value of the classification neural network 101 for the input data.

In operation 803, the computing device outputs a classification result of the input data using the classification neural network 101. The classification result may be a final class determined when the input data passes through a final layer of the classification neural network 101. For example, when the input data is an image, the classification result may be one of a plurality of classes, for example, dogs, cats, airplanes, ships, people, traffic lights, vehicles, or bicycles.

In operation 804, the computing device inputs the intermediate output value of the classification neural network 101 for the input data to the verification neural network 102. The intermediate output value of the classification neural network 101 may be an output value of one of a plurality of hidden layers included in the classification neural network 101.

In operation 805, the computing device determines a reliability of the classification result of the input data using the verification neural network 102.

In operation 806, the computing device may compare the reliability of the classification result of the input data to a predetermined reference value and may determine whether to use the classification result of the input data. In an example, when the reliability of the classification result of the input data exceeds the predetermined reference value, the computing device may output the classification result of the input data. In another example, when the reliability of the classification result of the input data is less than the predetermined reference value, the computing device may reject the classification result of the input data or may perform another predetermined action.

The methods according to the examples described above may be written in a computer-executable program and may be implemented as various recording media such as magnetic storage media, optical reading media, and digital storage media.

Various techniques described herein may be implemented in digital electronic circuitry, computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal, for processing by, or to control an operation of, a data processing apparatus, e.g., a programmable processor, a computer, or multiple computers. A computer program, such as the computer program(s) described above, may be written in any form of a programming language, including compiled or interpreted languages, and may be deployed in any form, including as a stand-alone program or as a module, a component, a subroutine, or other units suitable for use in a computing environment. A computer program may be deployed to be processed on one computer or multiple computers at one site or distributed across multiple sites and interconnected by a communication network.

Processors suitable for processing of a computer program include, by way of example, both general and special purpose microprocessors, and any one or more processors of any kind of digital computer. Generally, a processor will receive instructions and data from a read-only memory or a random-access memory, or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Examples of information carriers suitable for embodying computer program instructions and data include semiconductor memory devices, e.g., magnetic media such as hard disks, floppy disks, and magnetic tape, optical media such as compact disk read only memory (CD-ROM) or digital video disks (DVDs), magneto-optical media such as floptical disks, read-only memory (ROM), random-access memory (RAM), flash memory, erasable programmable ROM (EPROM), or electrically erasable programmable ROM (EEPROM). The processor and the memory may be supplemented by, or incorporated in special purpose logic circuitry.

In addition, non-transitory computer-readable media may be any available media that may be accessed by a computer and may include both computer storage media and transmission media.

In a specific case, multitasking and parallel processing may be advantageous. In addition, it should not be understood that the separation of various device components of the aforementioned examples is required for all the examples, and it should be understood that the aforementioned program components and apparatuses may be integrated into a single software product or packaged into multiple software products.

## Claims

1. A computer-implemented neural network learning method comprising:
receiving image or audio training data that is to be learned by a classification neural network (101) comprising a plurality of hidden layers, wherein the classification neural network (101) is configured to receive image or audio input data to be classified and to output a classification result of the input data, wherein the classification neural network (101) is configured to determine a classification score of each of a plurality of classes represented by the training data for the input data and to determine a class of the plurality of classes with a highest classification score as the classification result;
outputting, by the classification neural network (101), an intermediate output value for the training data and a first score of a central point (x) corresponding to the intermediate output value, wherein the intermediate output value is an output value of one or more of the plurality of hidden layers and wherein the first score is a classification score of the classification result for the training data;
receiving, by a verification neural network (102) configured to output a reliability of the classification result of the classification neural network (101), the intermediate output value and the first score from the classification neural network (101);
determining, by a reliability model of the verification neural network (102), a second score of a sample point (y1, y2) corresponding to sample data randomly generated around the central point (x), wherein the second score corresponds to a reliability score of the sample data;
training the classification neural network (101) using the training data; and
training the verification neural network (102) based on the intermediate output value for the training data and based on the first score and the second score.

2. The neural network learning method of claim 1, wherein the classification neural network and the verification neural network are trained simultaneously.

3. The neural network learning method of claim 1 or 2, wherein the verification neural network is trained based on attribute information of the training data and a distance between the training data and the sample data, using the reliability model.

4. The neural network learning method of any one of the claims 1-3, wherein in the reliability model, a reliability decreases when a distance between the central point corresponding to the training data and the sample point corresponding to the sample data increases.

5. The neural network learning method of any one of the claims 1-4, wherein the verification neural network is trained using either:
(i) a first reliability model that determines a reliability of the sample point corresponding to the sample data with an attribute similar to the training data based on a distance between the sample point and the central point corresponding to the training data; or
(ii) a second reliability model that determines a reliability of the sample point corresponding to the sample data with an attribute similar to the training data based on a distance between the sample point and the central point corresponding to the training data and based on a gradient direction of the central point that is attribute information of the training data; wherein the gradient direction of the central point represents a direction in which a score of a sample point is most sharply changed around the central point.

6. The neural network learning method of any one of the claims 1-5, wherein the verification neural network (102) is a convolutional neural network, CNN, and/or comprises at least five hidden layers.

7. The neural network learning method of any one of the claims 1-6, wherein the classification neural network (101) is a CNN, and/or comprises an input layer and an output layer, and wherein preferably the plurality of hidden layers comprises at least five hidden layers, wherein the intermediate output value of the classification neural network (101) is an output of a hidden layer closer to the output layer than the input layer.

8. A computing device comprising a processor configured to perform the neural network learning method according to any of the preceding claims.

9. A computer-implemented classification result verification method comprising:
receiving image or audio input data that is to be classified by a classification neural network (101) comprising a plurality of hidden layers, wherein the classification neural network (101) is the same as the one introduced in claim 1;
outputting, by the classification neural network (101), an intermediate output value for the input data, wherein the intermediate output value is an output value of one or more of the plurality of hidden layers;
outputting, by the classification neural network (101), a classification result of the input data;
receiving, by a verification neural network (102) trained to verify the classification result of the classification neural network (101) by using the neural network learning method of any of the claims 1 to 7, the intermediate output value from the classification neural network (101); and
outputting, by the verification neural network (102), a reliability of the classification result of the input data of the classification neural network (101), based on the intermediate output value.

10. The classification result verification method of claim 9, further comprising:
determining whether the classification result of the input data determined by the classification neural network (101) is to be used, based on the reliability of the classification result of the input data.

11. A computing device comprising:
a classification neural network (101) comprising a plurality of hidden layers, wherein the classification neural network (101) is the same as the one introduced in claim 1; and
a verification neural network (102) trained to verify the classification result of the classification neural network (101) by using the neural network learning method of any of the claims 1-7;
wherein the verification neural network (102) is further configured to receive the intermediate output value from the classification neural network (101) and output a reliability of the classification result.

12. The computing device of claim 11, configured to perform the classification result verification method of any of claims 9-10.

## Patentansprüche

1. Computerimplementiertes Lernverfahren eines neuronalen Netzwerks, das Folgendes umfasst:
Empfangen von Bild- oder Audio-Trainingsdaten, die durch ein neuronales Klassifizierungsnetzwerk (101) zu lernen sind, das eine Vielzahl von versteckten Schichten umfasst,
wobei das neuronale Klassifizierungsnetzwerk (101) dazu konfiguriert ist, zu klassifizierende Bild- oder Audio-Eingabedaten zu empfangen und ein Klassifizierungsergebnis der Eingabedaten auszugeben, wobei das neuronale Klassifizierungsnetzwerk (101) dazu konfiguriert ist, eine Klassifizierungsbewertung für jede aus der Vielzahl von Klassen, die durch die Trainingsdaten für die Eingabedaten repräsentiert werden, zu bestimmen, und eine Klasse aus der Vielzahl von Klassen mit einer höchsten Klassifizierungsbewertung als das Klassifizierungsergebnis zu bestimmen;
Ausgeben eines Zwischenausgabewertes für die Trainingsdaten und einer ersten Bewertung eines zentralen Punktes (x), der dem Zwischenausgabewert entspricht, durch das neuronale Klassifizierungsnetzwerk (101), wobei es sich bei dem Zwischenausgabewert um einen Ausgabewert von einer oder mehreren der Vielzahl von versteckten Schichten handelt und wobei es sich bei der ersten Bewertung um eine Klassifizierungsbewertung des Klassifizierungsergebnisses für die Trainingsdaten handelt;
Empfangen des Zwischenausgabewertes und der ersten Bewertung von dem neuronalen Klassifizierungsnetzwerk (101) durch ein neuronales Verifizierungsnetzwerk (102), das dazu konfiguriert ist, eine Zuverlässigkeit des Klassifizierungsergebnisses des neuronalen Netzwerks (101) auszugeben;
Bestimmen einer zweiten Bewertung eines Abtastpunkts (y1, y2), der Abtastdaten entspricht, die zufällig um den zentralen Punkt (x) herum erzeugt wurden, durch ein Zuverlässigkeitsmodell des neuronalen Verifizierungsnetzwerks (102), wobei die zweite Bewertung einer Zuverlässigkeitsbewertung der Abtastdaten entspricht;
Trainieren des neuronalen Klassifizierungsnetzwerks (101) unter Verwendung der Trainingsdaten; und
Trainieren des neuronalen Verifizierungsnetzwerks (102) basierend auf dem Zwischenausgabewert für die Trainingsdaten und basierend auf der ersten Bewertung und der zweiten Bewertung.

2. Lernverfahren eines neuronalen Netzwerks nach Anspruch 1, wobei das neuronale Klassifizierungsnetzwerk und das neuronale Verifizierungsnetzwerk gleichzeitig trainiert werden.

3. Lernverfahren eines neuronalen Netzwerks nach Anspruch 1 oder 2, wobei das neuronale Verifizierungsnetzwerk basierend auf Attributinformationen der Trainingsdaten und einem Abstand zwischen den Trainingsdaten und den Abtastdaten unter Verwendung des Zuverlässigkeitsmodells trainiert wird.

4. Lernverfahren eines neuronalen Netzwerks nach einem der Ansprüche 1 bis 3, wobei in dem Zuverlässigkeitsmodell eine Zuverlässigkeit abnimmt, wenn ein Abstand zwischen dem zentralen Punkt, der den Trainingsdaten entspricht, und dem Abtastpunkt, der den Probendaten entspricht, zunimmt.

5. Lernverfahren eines neuronalen Netzwerks nach einem der Ansprüche 1 bis 4, wobei das neuronale Verifizierungsnetzwerk trainiert wird unter Verwendung von entweder:
(i) einem ersten Zuverlässigkeitsmodell, das eine Zuverlässigkeit des Abtastpunkts bestimmt, der den Abtastdaten mit einem Attribut entspricht, das den Trainingsdaten ähnlich ist, und zwar basierend auf einem Abstand zwischen dem Abtastpunkt und dem zentralen Punkt, der den Trainingsdaten entspricht; oder
(ii) einem zweiten Zuverlässigkeitsmodell, das eine Zuverlässigkeit des Abtastpunkts bestimmt, der den Probendaten mit einem den Trainingsdaten ähnlichen Attribut entspricht, und zwar basierend auf einem Abstand zwischen dem Abtastpunkt und dem zentralen Punkt, der den Trainingsdaten entspricht, und basierend auf einer Gradientenrichtung des zentralen Punkts, bei der es sich um Attributinformationen der Trainingsdaten handelt; wobei die Gradientenrichtung des zentralen Punkts eine Richtung darstellt, in der eine Bewertung eines Abtastpunkts am stärksten um den zentralen Punkt herum geändert wird.

6. Lernverfahren eines neuronalen Netzwerks nach einem der Ansprüche 1 bis 5, wobei das neuronale Verifizierungsnetzwerk (102) ein neuronales Faltungsnetzwerk (CNN, Convolutional Neural Network) ist und/oder zumindest fünf versteckte Schichten umfasst.

7. Lernverfahren eines neuronalen Netzwerks nach einem der Ansprüche 1 bis 6, wobei das neuronale Klassifizierungsnetz (101) ein CNN ist und/oder eine Eingabeschicht und eine Ausgabeschicht umfasst, und wobei vorzugsweise die Vielzahl von versteckten Schichten zumindest fünf versteckte Schichten umfasst, wobei der Zwischenausgabewert des neuronalen Klassifizierungsnetzes (101) eine Ausgabe einer versteckten Schicht ist, die näher an der Ausgabeschicht liegt als die Eingabeschicht.

8. Computervorrichtung, die einen Prozessor umfasst, der dazu konfiguriert ist, das Lernverfahren eines neuronalen Netzwerks nach einem der vorhergehenden Ansprüche durchzuführen.

9. Computerimplementiertes Verfahren zur Verifizierung von Klassifizierungsergebnissen, das Folgendes umfasst:
Empfangen von Bild- oder Audio-Eingabedaten, die von einem neuronalen Klassifizierungsnetzwerk (101) zu klassifizieren sind, das eine Vielzahl von versteckten Schichten umfasst, wobei das neuronale Klassifizierungsnetzwerk (101) das gleiche ist wie das in Anspruch 1 eingeführte;
Ausgeben eines Zwischenausgabewerts für die Eingabedaten durch das neuronale Klassifizierungsnetzwerk (101), wobei es sich bei dem Zwischenausgabewert um einen Ausgabewert von einer oder mehreren aus der Vielzahl von versteckten Schichten handelt;
Ausgeben eines Klassifizierungsergebnisses der Eingabedaten durch das neuronale Klassifizierungsnetzwerk (101);
Empfangen des Zwischenausgabewerts von dem neuronalen Klassifizierungsnetzwerk (101) durch ein neuronales Verifizierungsnetzwerk (102), das trainiert ist, um das Klassifizierungsergebnis des neuronalen Klassifizierungsnetzwerks (101) unter Verwendung des Lernverfahrens des neuronalen Netzwerks nach einem der Ansprüche 1 bis 7 zu verifizieren; und
Ausgeben einer Zuverlässigkeit des Klassifizierungsergebnisses der Eingabedaten des neuronalen Klassifizierungsnetzwerks (101) durch das neuronale Verifizierungsnetzwerk (102) basierend auf dem Zwischenausgabewert.

10. Verfahren zur Verifizierung von Klassifizierungsergebnissen nach Anspruch 9, das ferner Folgendes umfasst:
Bestimmen, ob das durch das neuronale Klassifizierungsnetzwerk (101) bestimmte Klassifizierungsergebnis der Eingabedaten zu verwenden ist, basierend auf der Zuverlässigkeit des Klassifizierungsergebnisses der Eingabedaten.

11. Computervorrichtung, die Folgendes umfasst:
ein neuronales Klassifizierungsnetzwerk (101), das eine Vielzahl von versteckten Schichten umfasst, wobei das neuronale Klassifizierungsnetzwerk (101) dasselbe ist wie das in Anspruch 1 eingeführte; und
ein neuronales Verifizierungsnetzwerk (102), das trainiert ist, um das Klassifizierungsergebnis des neuronalen Klassifizierungsnetzwerks (101) zu verifizieren, unter Verwendung des Lernverfahrens des neuronalen Netzwerks nach einem der Ansprüche 1 bis 7;
wobei das neuronale Verifizierungsnetzwerk (102) ferner dazu konfiguriert ist, den Zwischenausgabewert von dem neuronalen Klassifizierungsnetzwerk (101) zu empfangen und eine Zuverlässigkeit des Klassifizierungsergebnisses auszugeben.

12. Computervorrichtung nach Anspruch 11, die dazu konfiguriert ist, das Verfahren zur Verifizierung von Klassifizierungsergebnissen nach einem der Ansprüche 9 und 10 durchzuführen.

## Revendications

1. Procédé d'apprentissage propre à un réseau neuronal mis en œuvre par ordinateur, comprenant :
la réception de données d'image ou audio d'entraînement qui doivent être apprises par un réseau neuronal de classification (101) comprenant une pluralité de couches cachées, ledit réseau neuronal de classification (101) étant configuré pour recevoir des données d'image ou audio d'entrée à classifier et pour produire un résultat de classification des données d'entrée, ledit réseau neuronal de classification (101) étant configuré pour déterminer un score de classification pour chaque classe d'une pluralité de classes représentées par les données d'entraînement relativement aux données d'entrée et pour déterminer la classe ayant le score de classification le plus élevé comme résultat de classification parmi ladite pluralité de classes ;
la production, par le réseau neuronal de classification (101), d'une valeur de sortie intermédiaire relativement aux données d'entraînement et d'un premier score d'un point central (x) correspondant à la valeur de sortie intermédiaire, ladite valeur de sortie intermédiaire étant une valeur de sortie d'une ou plusieurs couches de la pluralité de couches cachées et ledit premier score étant un score de classification du résultat de classification relativement aux données d'entraînement ;
la réception, par un réseau neuronal de vérification (102) configuré pour produire une fiabilité du résultat de classification du réseau neuronal de classification (101), de la valeur de sortie intermédiaire et du premier score en provenance du réseau neuronal de classification (101) ;
la détermination, par un modèle de fiabilité du réseau neuronal de vérification (102), d'un deuxième score d'un point échantillon (y1, y2) correspondant à des données échantillons générées de manière aléatoire autour du point central (x), ledit deuxième score correspondant à un score de fiabilité des données échantillons ;
l'entraînement du réseau neuronal de classification (101) à l'aide des données d'entraînement ; et
l'entraînement du réseau neuronal de vérification (102) compte tenu de la valeur de sortie intermédiaire relativement aux données d'entraînement et compte tenu du premier score et du deuxième score.

2. Procédé d' apprentissage propre à un réseau neuronal selon la revendication 1, dans lequel le réseau neuronal de classification et le réseau neuronal de vérification sont entraînés simultanément.

3. Procédé d'apprentissage propre à un réseau neuronal selon la revendication 1 ou 2, dans lequel le réseau neuronal de vérification est entraîné compte tenu d'informations d'attributs des données d'entraînement et d'une distance entre les données d'entraînement et les données échantillons, au moyen du modèle de fiabilité.

4. Procédé d'apprentissage propre à un réseau neuronal selon l'une quelconque des revendications 1 à 3, dans lequel, dans le modèle de fiabilité, la fiabilité diminue avec l'augmentation de la distance entre le point central correspondant aux données d'entraînement et le point échantillon correspondant aux données échantillons.

5. Procédé d'apprentissage propre à un réseau neuronal selon l'une quelconque des revendications 1 à 4, dans lequel le réseau neuronal de vérification est entraîné :
(i) soit au moyen d'un premier modèle de fiabilité qui détermine la fiabilité du point échantillon correspondant aux données échantillons avec un attribut similaire aux données d'apprentissage, compte tenu de la distance entre le point échantillon et le point central correspondant aux données d'apprentissage,
(ii) soit au moyen d'un deuxième modèle de fiabilité qui détermine la fiabilité du point échantillon correspondant aux données échantillons avec un attribut similaire aux données d'entraînement, compte tenu de la distance entre le point échantillon et le point central correspondant aux données d'entraînement et d'une direction de gradient du point central qui constitue une information d'attribut des données d'entraînement ; ladite direction de gradient du point central représentant une direction dans laquelle le score d'un point échantillon change le plus fortement autour du point central.

6. Procédé d'apprentissage propre à un réseau neuronal selon l'une quelconque des revendications 1 à 5, dans lequel le réseau neuronal de vérification (102) est un réseau neuronal convolutif (RNC) et/ou comprend au moins cinq couches cachées.

7. Procédé d'apprentissage propre à un réseau neuronal selon l'une quelconque des revendications 1 à 6, dans lequel le réseau neuronal de classification (101) est un RNC et/ou comprend une couche d'entrée et une couche de sortie, et dans lequel de préférence la pluralité de couches cachées comprend au moins cinq couches cachées, ladite valeur de sortie intermédiaire du réseau neuronal de classification (101) étant produite par une couche cachée plus proche de la couche de sortie que de la couche d'entrée.

8. Dispositif informatique comprenant un processeur configuré pour exécuter le procédé d'apprentissage propre à un réseau neuronal selon l'une quelconque des revendications précédentes.

9. Procédé de vérification de résultat de classification mis en œuvre par ordinateur comprenant :
la réception de données d'image ou audio d'entrée qui doivent être classées par un réseau neuronal de classification (101) comprenant une pluralité de couches cachées, ledit réseau neuronal de classification (101) étant identique à celui présenté dans la revendication 1 ;
la production, par le réseau neuronal de classification (101), d'une valeur de sortie intermédiaire relativement aux données d'entrée, ladite valeur de sortie intermédiaire étant une valeur de sortie d'une ou plusieurs des couches cachées ;
la production, par le réseau neuronal de classification (101), d'un résultat de classification des données d'entrée ;
la réception, par un réseau neuronal de vérification (102) entraîné à vérifier le résultat de classification du réseau neuronal de classification (101) au moyen du procédé d'apprentissage propre à un réseau neuronal selon l'une quelconque des revendications 1 à 7, de la valeur de sortie intermédiaire en provenance du réseau neuronal de classification (101) ; et
la production, par le réseau neuronal de vérification (102), d'une fiabilité du résultat de classification des données d'entrée du réseau neuronal de classification (101), compte tenu de la valeur de sortie intermédiaire.

10. Procédé de vérification de résultats de classification selon la revendication 9, comprenant en outre :
la détermination du fait que le résultat de classification des données d'entrée déterminé par le réseau neuronal de classification (101) doit être utilisé ou non, compte tenu de la fiabilité du résultat de classification des données d'entrée.

11. Dispositif informatique comprenant :
un réseau neuronal de classification (101) comprenant une pluralité de couches cachées, ledit réseau neuronal de classification (101) étant identique à celui présenté dans la revendication 1, et
un réseau neuronal de vérification (102) entraîné à vérifier le résultat de classification du réseau neuronal de classification (101) au moyen du procédé d'apprentissage propre à un réseau neuronal selon l'une quelconque des revendications 1 à 7 ;
ledit réseau neuronal de vérification (102) étant en outre configuré pour recevoir la valeur de sortie intermédiaire en provenance du réseau neuronal de classification (101) et pour produire une fiabilité du résultat de classification.

12. Dispositif informatique selon la revendication 11, configuré pour exécuter le procédé de vérification de résultats de classification selon l'une quelconque des revendications 9 et 10.
